# EUROPEAN PATENT APPLICATION

(11) **EP 4 397 472 A1**
(43) Date of publication of application: **10.07.2024**
(21) Application number: 24150230.1
(22) Date of filing: 03.01.2024
(51) Int. Cl.: B29C 65/08, B29C 65/00

(54) **METHOD OF ULTRASONIC WELDING THERMOPLASTIC COMPOSITE COMPONENTS**

(30) Priority: 03.01.2023 US 202318092884
(71) Applicant: Rohr, Inc., Chula Vista, CA 91910-2098 (US)
(72) Inventor: SHEN, Shyan Bob, San Diego, 92126 (US); van TOOREN, Michael, San Diego, 92122 (US); ADAN, Andrew, Corona, 92882 (US); RAMOS, Roberto, Moreno Valley, 92555 (US)
(74) Representative: Dehns

(57) **Abstract**

A method for welding thermoplastic composite components (20, 22) is provided that includes: providing a first thermoplastic composite component (20) having a first weld region surface (20A); providing a second thermoplastic composite component (22) having a second weld region surface (22A); disposing the first and second weld region surfaces (20A, 22A) in stationary contact with one another; ultrasonically welding the first and second thermoplastic composite components (22) using a ultrasonic welding device (24) having a sonotrode (26) that linearly reciprocates, the welding including contacting an engagement surface (27) of the first or second thermoplastic composite component (22) with the sonotrode (26) and reciprocating the sonotrode (26) along a travel axis (28) that is parallel to the first and second weld region surfaces (20A, 22A) until at least one of the first or second thermoplastic material reaches a melt temperature; and then maintaining the first and second weld region surfaces (20A, 22A) stationary until cooled.

## Description

### BACKGROUND OF THE INVENTION

### 1. Technical Field

The present disclosure relates to methods for joining thermoplastic composite components in general, and to methods for joining thermoplastic composite components using ultrasonic techniques in particular.

### 2. Background Information

Components made from thermoplastic composite materials are increasingly in demand in the aircraft and other industries as a result of the wide-ranging advantages of the materials. Thermoplastic composite materials can be used to form lightweight and high-strength structures having complex shapes. In addition, thermoplastic composite materials, as compared to thermoset materials, offer extended shelf life, the ability to be recycled/reformed, improved damage tolerance properties, as well as moisture and chemical resistance.

Widespread adoption of thermoplastic composite materials in some industries, such as the aircraft industry, has been limited as a result of challenges with joining thermoplastic composite components. For example, some existing joining processes may leave a surface deformation / weld print on a surface that is cosmetically undesirable and/or the current processes may take a considerable amount of time. Some current ultrasonic welding methods used on thermoplastic composite components are ultrasonically vibrating in a direction perpendicular to the weld surface and require a layer of thermoplastic film between the surfaces to be welded. The article "Ultrasonic welding of Thermoplastic Composites" by Irene Villegas (Frontiers in Materials, Vol. 6, Article 291, November 2019) discloses aspects of ultrasonic welding thermoplastic composites.

What is needed is an ultrasonic welding joining process that can easily be used, one that does not need to use a thermoplastic film between the surfaces to be joined, one that does not leave cosmetically undesirable surface defects, and one that can join components rapidly.

### SUMMARY OF THE INVENTION

According to an aspect of the present disclosure, a method for welding thermoplastic composite components is provided that includes: providing a first thermoplastic composite component having a first weld region surface, the first thermoplastic composite component comprising a first thermoplastic matrix material having a first melt temperature; providing a second thermoplastic composite component having a second weld region surface, the second thermoplastic composite component comprising a second thermoplastic matrix material having a second melt temperature; disposing the first weld region surface and the second weld region surface in stationary contact with one another; ultrasonically welding the first thermoplastic composite component to the second thermoplastic composite component using a ultrasonic welding device having a sonotrode that linearly reciprocates, the ultrasonic welding including contacting an engagement surface of the first thermoplastic composite component or the second thermoplastic composite component with the sonotrode and reciprocating the sonotrode along a travel axis that is parallel to the first weld region surface and the second weld region surface until the first thermoplastic matrix material reaches the first melt temperature, or the second thermoplastic matrix material reaches the second melt temperature, or both; and subsequent to the ultrasonic welding, maintaining the first weld region surface and the second weld region surface stationary relative to one another until the first thermoplastic matrix material cools below the first melt temperature, or the second thermoplastic matrix material cools below the second melt temperature, or both.

In any of the aspects or embodiments described above and herein, the first thermoplastic matrix material or the second thermoplastic composite material, or both, may include at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

In any of the aspects or embodiments described above and herein, the first and second thermoplastic matrix materials may be the same material.

In any of the aspects or embodiments described above and herein, the first thermoplastic composite component or the second thermoplastic composite material, or both, may include a composite reinforcement material that includes at least one of glass fibers, carbon fibers, aramid fibers, basalt fibers, mineral fibers, fibers from renewable raw materials, metal fibers, or polymer fibers.

In any of the aspects or embodiments described above and herein, the first thermoplastic composite component may include a first outermost fiber reinforcement layer next to the first weld region surface having a plurality of first fibers all extending in substantially along a first fiber orientation, and the second thermoplastic composite component may include a second outermost fiber reinforcement layer next to the second weld region surface having a plurality of second fibers all extending substantially along a second fiber orientation.

In any of the aspects or embodiments described above and herein, the first fiber orientation may be disposed at a first angle relative to the travel axis, and the second fiber orientation may be disposed at a second angle relative to the travel axis, and the second angle is different from the first angle.

In any of the aspects or embodiments described above and herein, the first fiber orientation may be disposed at a first angle relative to the travel axis, and the second fiber orientation may be disposed at a second angle relative to the travel axis, and the second angle is the same as the first angle and neither is zero degrees or ninety degrees.

In any of the aspects or embodiments described above and herein, the first fiber orientation may be disposed at a first angle in a first range between zero degrees and ninety degrees relative to the travel axis, and the second fiber orientation may be disposed at a second angle that is in a second range that is greater than zero degrees and less than ninety degrees relative to the travel axis.

In any of the aspects or embodiments described above and herein, the first angle may be about forty-five degrees relative to the travel axis and the second angle may be about forty-five degrees relative to the travel axis.

In any of the aspects or embodiments described above and herein, the first fiber orientation may be perpendicular to the second fiber orientation.

In any of the aspects or embodiments described above and herein, the first fiber orientation may be parallel to the second fiber orientation.

In any of the aspects or embodiments described above and herein, the ultrasonically welding may include applying a welding force to the sonotrode that is normal to the engagement surface of the first thermoplastic composite component or the second thermoplastic composite component that the sonotrode is contacting.

According to an aspect of the present disclosure, a method for welding thermoplastic composite components is provided that includes: providing a first component having a first weld region surface, the first component comprising a first thermoplastic matrix material having a first melt temperature and a first composite reinforcement material that includes a plurality of first fibers; providing a second component having a second weld region surface, the second component comprising a second thermoplastic matrix material having a second melt temperature and a second composite reinforcement material that includes a plurality of second fibers; disposing the first weld region surface and the second weld region surface in stationary contact with one another; ultrasonically welding the first component to the second component using a ultrasonic welding device having a sonotrode that linearly reciprocates, the ultrasonic welding including contacting an engagement surface of the first component or the second component with the sonotrode, applying a welding force normal to the engagement surface using the sonotrode, and reciprocating the sonotrode along a travel axis that is parallel to the first weld region surface and the second weld region surface until the first thermoplastic matrix material reaches the first melt temperature, or the second thermoplastic matrix material reaches the second melt temperature, or both; and subsequent to the ultrasonic welding, maintaining the first weld region surface and the second weld region surface stationary relative to one another with the normal welding force maintained until the first thermoplastic matrix material cools below the first melt temperature, or the second thermoplastic matrix material cools below the second melt temperature, or both.

In any of the aspects or embodiments described above and herein, the first fibers may be disposed in a first outermost fiber reinforcement layer next to the first weld region surface and all of the first fibers extend in a first fiber orientation, and the second fibers may be disposed in a second outermost fiber reinforcement layer next to the second weld region surface and all of the second fibers extend in a second fiber orientation.

In any of the aspects or embodiments described above and herein, the first fiber orientation may be disposed at a first angle relative to the travel axis, and the second fiber orientation may be disposed at a second angle relative to the travel axis, and the second angle is different from the first angle.

In any of the aspects or embodiments described above and herein, the first fiber orientation may be disposed at a first angle relative to the travel axis, and the second fiber orientation may be disposed at a second angle relative to the travel axis, and the second angle is the same as the first angle and neither is zero degrees or ninety degrees.

In any of the aspects or embodiments described above and herein, the first fiber orientation may be disposed at a first angle in a first range between zero degrees and ninety degrees relative to the travel axis, and the second fiber orientation may be disposed at a second angle that is in a second range that is greater than zero degrees and less than ninety degrees relative to the travel axis.

In any of the aspects or embodiments described above and herein, the first angle may be about forty-five degrees relative to the travel axis and the second angle may be about forty-five degrees relative to the travel axis.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a linear welding device being used to join a pair of thermoplastic composite panels.
FIG. 1A is a diagrammatic representation of a vertical ultrasonic welding technique.
FIG. 2 diagrammatically illustrates a component comprising a thermoplastic composite material with reinforcing fibers oriented linearly.
FIG. 3A diagrammatically illustrates a side planar view of a pair of thermoplastic composite material parts.
FIG. 3B is a planar view of a first side of the pair of thermoplastic composite parts shown in FIG. 3A.
FIG. 3C is a planar view of a second side of the pair of thermoplastic composite parts shown in FIG. 3A.
FIG. 4A diagrammatically illustrates a side planar view of a pair of thermoplastic composite material parts.
FIG. 4B is a planar view of a first side of the pair of thermoplastic composite parts shown in FIG. 4A.
FIG. 4C is a planar view of a second side of the pair of thermoplastic composite parts shown in FIG. 4A.
FIG. 5A diagrammatically illustrates a side planar view of a pair of thermoplastic composite material parts.
FIG. 5B is a planar view of a first side of the pair of thermoplastic composite parts shown in FIG. 5A.
FIG. 5C is a planar view of a second side of the pair of thermoplastic composite parts shown in FIG. 5A.

### DETAILED DESCRIPTION

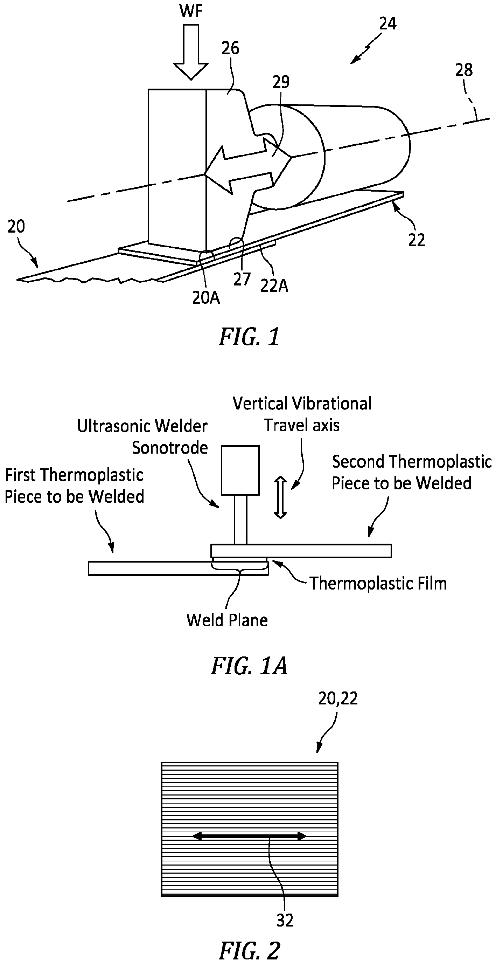

Referring to FIGS. 1-5C, components made from thermoplastic composite materials are utilized in a variety of different applications, including but not limited to aircraft applications such as nacelle components, fuselage components, wing components, interior cabin components, control surface components, and the like. In many instances, these components are formed from two or more thermoplastic composite parts that are subsequently joined together. Aspects of the present disclosure include a new, unobvious method for ultrasonically welding such parts in the production of a thermoplastic composite component. Each thermoplastic composite part has at least one weld region surface and the weld region surface of the first part is welded to the weld region surface of the second part. The present disclosure may be used to weld thermoplastic composite parts with a variety of different geometric configurations provided the two parts have weld region surfaces that are compatible with another for the welding process; e.g., the weld region surfaces are parallel one another.

In some instances, a thermoplastic composite part weld region surface may not require any preparation prior to the joining process. In other instances, the joining process may benefit from a weld region surface being prepared prior to the joining process. For example, the joining process may benefit from a weld region surface being modified prior to being welded. For example, a preparation process that includes altering the surface properties of the weld region surface; e.g., smooth a rough surface or roughen a smooth surface. In some instances, a preparation process may include a cleaning process that cleans the weld region surface of debris and/or contaminants that may negatively affect the welding process. The present disclosure is not limited to any preparation process, and may not include any preparation step. In some instances, the preparation process may include a plurality of steps; e.g., an initial cleaning, a surface preparation process, a final cleaning, etc. The above preparation process examples are provided as illustrative examples and the present disclosure is not limited to these particular preparation processes.

The present disclosure welding process may be used to join parts comprising a variety of different thermoplastic composite materials. In instances where a first thermoplastic composite part is being joined to a second thermoplastic composite part, the first and second thermoplastic composite parts may comprise the same thermoplastic composite material. In other instances, the first and second thermoplastic composite parts may comprise different thermoplastic composite materials. The thermoplastic composite parts to be welded may include a thermoplastic matrix material such as polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK), or the like, or any combination thereof. The present disclosure is not limited to these thermoplastic matrix materials. The present disclosure may be used to join thermoplastic composite parts that comprise a composite reinforcement material such as glass fibers, carbon fibers, aramid fibers, basalt fibers, mineral fibers, fibers from renewable raw materials, metal fibers, or polymer fibers, or the like, or any combination thereof. The present disclosure is not limited to these composite reinforcement materials. Thermoplastic composite materials are described herein, at least in part, in terms of their melt temperature. More specifically, the thermoplastic matrix material of a thermoplastic composite material is described herein in terms of its melt temperature. A person of skill in the art will recognize that strictly speaking the melt temperature of a given type of thermoplastic matrix material may vary slightly; e.g., because of factors associated with the manufacturing of that material and the like. A person of skill in the art will recognize further that the melt temperature of a thermoplastic matrix material in a thermoplastic composite material may be influenced by the reinforcement materials within that thermoplastic composite material. Hence, the present disclosure contemplates that the melt temperature of a thermoplastic matrix material may vary depending on the application and is not limited to any theoretical value, but rather refers to the temperature at which the thermoplastic matrix material of a part 20, 22 does in fact melt.

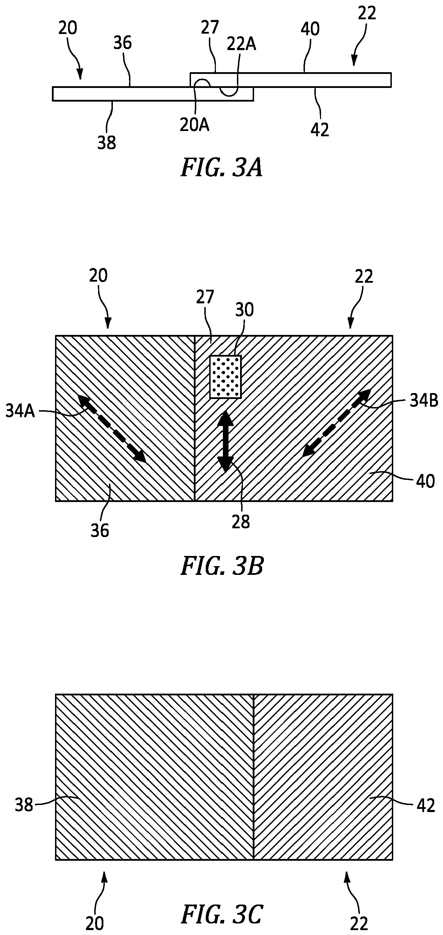

Referring to FIG. 1, in some embodiments the present disclosure welding process uses a linear ultrasonic welding technique to join a first thermoplastic composite part 20 to a second thermoplastic composite part 22. As will be described below, a linear ultrasonic welding technique utilizes a sonotrode that is actuated back and forth (i.e., reciprocated at a frequency) along a vibrational travel axis that is typically parallel to the weld plane. This is in contrast to a vertical ultrasonic welding technique that utilizes a sonotrode that is actuated back and forth (i.e., reciprocated at a frequency) along a vibrational travel axis that is perpendicular to the weld plane; e.g., see FIG. 1A. Vertical ultrasonic welding also requires a layer of thermoplastic film with specific thickness range be disposed between the two thermoplastic composite parts to achieve welding. Referring back to FIG. 1, during the welding process, both of the thermoplastic composite parts 20, 22 to be welded are maintained stationary and the surface regions of the parts 20, 22 to be welded ("weld region surfaces" 20A, 22A) are disposed in contact with one another. The contact region between the parts 20, 22 defines a weld plane. The present disclosure method does not require a layer of thermoplastic film at the interface between the weld region surfaces 20A, 22A. The linear ultrasonic welding technique utilizes an ultrasonic welding device 24 that includes a member 26 (often referred to as a "sonotrode" or a "horn") that engages with an exposed surface ("engagement surface 27") of one of the parts 20, 22 to be welded that is opposite where the weld region surfaces 20A, 22A are in contact with one another. FIG. 1 shows part 22 having the engagement surface 27. The ultrasonic welding device 24 is configured to apply a weld force ("WF") to the sonotrode 26 that is substantially normal to the engagement surface 27. The sonotrode 26 is actuated back and forth (i.e., reciprocated at a frequency, as symbolized by arrow 29) along a vibrational travel axis 28. The vibrational travel axis 28 is typically parallel to the weld plane. The combination of the weld force WF normal to the engagement surface 27, friction between the sonotrode 26 and the engagement surface 27, and the vibrational movement of the sonotrode 26 relative to the engagement surface 27 produces thermal energy that elevates the temperature of both of the thermoplastic composite parts 20, 22 proximate the weld region surfaces 20A, 22A. The sonotrode 26 is actuated for a period of time that is sufficient for the thermoplastic matrix material of at least one of the weld region surfaces 20A, 22A to reach its melt temperature. Once the matrix melt temperature of at least one of the parts 20, 22 reaches its melt temperature at the respective weld region surface 20A, 22A, welding will occur at the interface between the two parts 20, 22. After welding occurs, the thermoplastic composite parts 20, 22 are maintained stationary relative to one another until the matrix material(s) cools below its (their) melt temperature. During this "cooling period" the ultrasonic welding device 24 is typically controlled to maintain the sonotrode weld force (WF) normal to the engagement surface. This type of welding process often produces a cosmetic blemish on the engagement surface 27 (often referred to as a "weld print 30"; see FIG. 3B) as a result of the sonotrode 26 engaging with that part. However, the weld print 30 is limited to the engagement surface 27 and the opposite outer surface is left unblemished. As an example of a present disclosure method, the method may use a Telsonic Ultrasonics MPX welder and may apply a weld force in the range of about 320 to 500 kilograms on coupons of 0.086" thickness (made of Toray TC1105 carbon fiber reinforced PPS) and the fiber orientation of the outermost fiber reinforcement layer of both coupons is at a negative forty-five degree angle (45°) relative to the vibrational travel axis. The weld strength of such a welding based on ASTM D1002 "single lap shear" is 20.1 MPa (2,909 psi). In another example, the same equipment and parameters are used to weld coupons of 0.042" thickness (made of Toray TC1225 carbon fiber reinforced PAEK) and the fiber orientation of the outermost fiber reinforcement layer of both coupons is at a zero degree angle (0°) relative to the vibrational travel axis. The weld strength of such a welding based on ASTM D1002 "single lap shear" is 33.6 MPa (4,879 psi).

Thermoplastic composite parts very often comprise a plurality of fiber reinforcement layers. The reinforcement fibers in each layer will typically have a fiber direction; i.e., all fibers in a layer are oriented in the same direction. In some instances, a thermoplastic composite part comprising a plurality of fiber reinforcement layers will have different layers with different fiber directions; e.g., a first layer with fibers oriented in a first direction and a second layer with fibers oriented in a second direction that is perpendicular to the first direction, or at opposing forty-five degree angles, or at opposing thirty degree angles, and the like. FIG. 2 diagrammatically illustrates a thermoplastic component 20, 22 with a fiber reinforcement layer disposed linearly as illustrated by arrow 32.

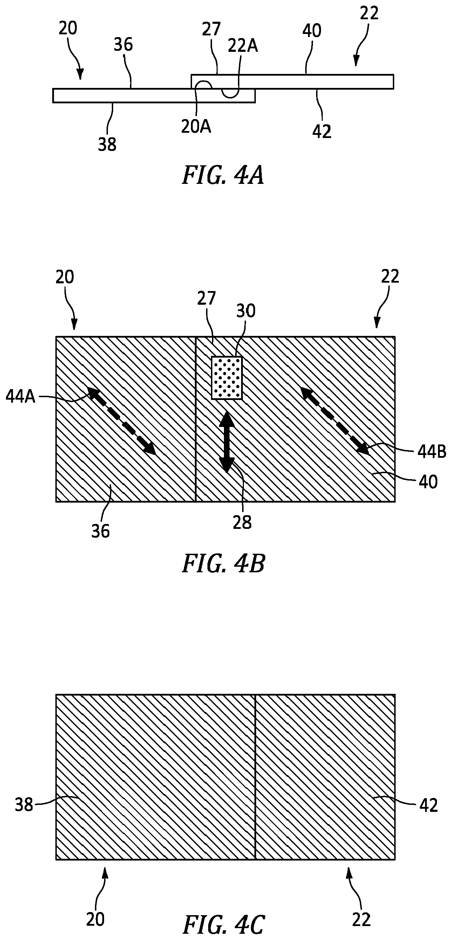

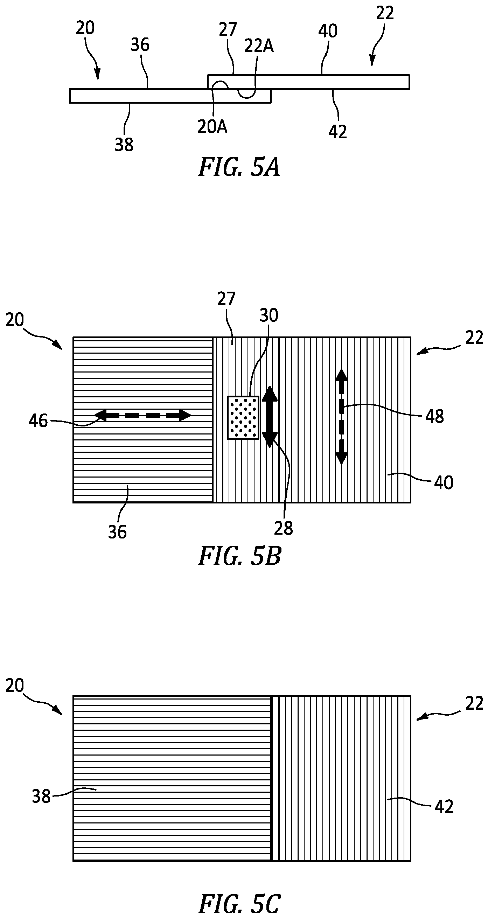

The inventors of the present disclosure have discovered that improved ultrasonic welds may be produced by arranging the thermoplastic composite parts to be joined in certain fiber orientations relative to the vibrational travel axis 28 of the sonotrode 26. More specifically, it has been discovered that an improved ultrasonic weld between two parts 20, 22 may be produced when the fiber orientation of the fiber reinforcement layer closest to the weld region surface of each part 20, 22 is at a particular angle relative to the vibrational travel axis 28 of the sonotrode 26. To simplify the description herein, the fiber reinforcement layer closest to the weld region surface of the respective part 20, 22 will be referred to hereinafter as the "outermost fiber reinforcement layer". To illustrate, FIGS. 3A-3C diagrammatically illustrate two thermoplastic composite parts 20, 22 each having an outermost fiber reinforcement layer with a fiber orientation that is at a forty-five degree (45°) angle relative to the ultrasonic welding vibrational travel axis 28. The first thermoplastic composite part 20 may be described as having a top surface 36 (that includes weld region surface 20A) and a bottom surface 38. The second thermoplastic composite part 22 may be described as having a top surface 40 and a bottom surface 42 (that includes weld region surface 22A). In this example, the fiber orientation of the outermost fiber reinforcement layer of one part 20, 22 is at a negative forty-five degree angle (-45°) relative to the vibrational travel axis 28, and the fiber orientation of the outermost fiber reinforcement layer of the other part 22, 20 is at a positive forty-five degree angle (+45°) relative to the vibrational travel axis 28 (as diagrammatically shown by arrows 34A, 34B). FIG. 3B diagrammatically illustrates the weld print 30 produced during the ultrasonic welding process disposed in the engagement surface 27 of the second thermoplastic composite part 22. FIG. 3C diagrammatically shows the opposite side of the joined thermoplastic composite parts, illustrating that there is no surface cosmetic blemish / weld print on the opposite surface (i.e., bottom surface 38). Hence, the present disclosure provides a joining means that does not impair the surface aesthetics on one side which is quite desirable in many applications. In another example, FIGS. 4A-4C diagrammatically illustrate two thermoplastic composite parts 20, 22 each having an outermost fiber reinforcement layer with a fiber orientation that is at a forty-five degree (45°) angle relative to the ultrasonic welding vibrational travel axis 28. In this example, the fiber orientation of the outermost fiber reinforcement layer of both parts 20, 22 is at a negative forty-five degree angle (-45°) relative to the vibrational travel axis 28 (as diagrammatically shown by arrows 44A, 44B). FIG. 4B diagrammatically illustrates the weld print 30 produced during the ultrasonic welding process disposed in the engagement surface 27 of the second thermoplastic composite part 22. FIG. 4C diagrammatically shows the opposite side of the joined thermoplastic composite parts 20, 22, illustrating that there is no surface cosmetic blemish / weld print on the opposite surface (i.e., bottom surface 38). In another example, FIGS. 5A-5C diagrammatically illustrate a first thermoplastic composite part 20 having an outermost fiber reinforcement layer with a fiber orientation that is at a ninety degree (90°) angle relative to the ultrasonic welding vibrational travel axis 28 (as indicated by arrow 46), and a second thermoplastic composite part 22 having an outermost fiber reinforcement layer with a fiber orientation that is at a zero degree (0°) angle (i.e., parallel) relative to the ultrasonic welding vibrational travel axis 28 (as indicated by arrow 48). In this example, the fiber orientation of the respective outermost fiber reinforcement layers are perpendicular one another, but only one of the fiber orientations is parallel the vibrational travel axis 28. FIG. 5B also diagrammatically shows the weld print 30 produced during the ultrasonic welding process disposed in the engagement surface 27 of the second thermoplastic composite part 22. FIG. 5C diagrammatically shows the opposite sides 38, 42 of the joined thermoplastic composite parts 20, 22, illustrating that there is no surface cosmetic blemish / weld print 30 on the opposite surface (i.e., bottom surface 38).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method for welding thermoplastic composite components (20, 22), comprising:
providing a first thermoplastic composite component (20) having a first weld region surface (20A), the first thermoplastic composite component (20) comprising a first thermoplastic matrix material having a first melt temperature;
providing a second thermoplastic composite component (22) having a second weld region surface (22A), the second thermoplastic composite component (22) comprising a second thermoplastic matrix material having a second melt temperature;
disposing the first weld region surface (20A) and the second weld region surface (22A) in stationary contact with one another;
ultrasonically welding the first thermoplastic composite component (20) to the second thermoplastic composite component (22) using a ultrasonic welding device (24) having a sonotrode (26) that linearly reciprocates, the ultrasonic welding including contacting an engagement surface (27) of the first thermoplastic composite component (20) or the second thermoplastic composite component (22) with the sonotrode (26) and reciprocating the sonotrode (26) along a travel axis (28) that is parallel to the first weld region surface (20A) and the second weld region surface (22A) until the first thermoplastic matrix material reaches the first melt temperature, or the second thermoplastic matrix material reaches the second melt temperature, or both; and
subsequent to the ultrasonic welding, maintaining the first weld region surface (20A) and the second weld region surface (22A) stationary relative to one another until the first thermoplastic matrix material cools below the first melt temperature, or the second thermoplastic matrix material cools below the second melt temperature, or both.

2. The method of claim 1, wherein the first thermoplastic matrix material includes at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

3. The method of claim 1 or 2, wherein the second thermoplastic matrix material includes at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone (PEKK), or poly aryl ether ketone (PAEK).

4. The method of any of claims 1 to 3, wherein the first thermoplastic matrix material and the second thermoplastic matrix material are the same material.

5. The method of any preceding claim, wherein:
the first thermoplastic composite component (20) comprises a first composite reinforcement material, and the first composite reinforcement material includes at least one of glass fibers, carbon fibers, aramid fibers, basalt fibers, mineral fibers, fibers from renewable raw materials, metal fibers, or polymer fibers; and/or
the second thermoplastic composite component (22) comprises a second composite reinforcement material, and the second composite reinforcement material includes at least one of glass fibers, carbon fibers, aramid fibers, basalt fibers, mineral fibers, fibers from renewable raw materials, metal fibers, or polymer fibers.

6. The method of any preceding claim, wherein the ultrasonically welding includes applying a welding force to the sonotrode (26) that is normal to the engagement surface (27) of the first thermoplastic composite component (20) or the second thermoplastic composite component (22) that the sonotrode (26) is contacting.

7. The method of any preceding claim, wherein the first thermoplastic composite component (20) comprises a first outermost fiber reinforcement layer next to the first weld region surface (20A) having a plurality of first fibers all extending in substantially along a first fiber orientation, and the second thermoplastic composite component (22) comprises a second outermost fiber reinforcement layer next to the second weld region surface (22A) having a plurality of second fibers all extending substantially along a second fiber orientation.

8. A method for welding thermoplastic composite components (20, 22), comprising:
providing a first component (20) having a first weld region surface (20A), the first component (20) comprising a first thermoplastic matrix material having a first melt temperature and a first composite reinforcement material that includes a plurality of first fibers;
providing a second component (22) having a second weld region surface (22A), the second component (22) comprising a second thermoplastic matrix material having a second melt temperature and a second composite reinforcement material that includes a plurality of second fibers;
disposing the first weld region surface (20A) and the second weld region surface (22A) in stationary contact with one another;
ultrasonically welding the first component (20) to the second component (22) using a ultrasonic welding device (24) having a sonotrode (26) that linearly reciprocates, the ultrasonic welding including contacting an engagement surface (27) of the first component (20) or the second component (22) with the sonotrode (26), applying a welding force normal to the engagement surface (27) using the sonotrode (26), and reciprocating the sonotrode (26) along a travel axis (28) that is parallel to the first weld region surface (20A) and the second weld region surface (22A) until the first thermoplastic matrix material reaches the first melt temperature, or the second thermoplastic matrix material reaches the second melt temperature, or both; and
subsequent to the ultrasonic welding, maintaining the first weld region surface (20A) and the second weld region surface (22A) stationary relative to one another with the normal welding force maintained until the first thermoplastic matrix material cools below the first melt temperature, or the second thermoplastic matrix material cools below the second melt temperature, or both.

9. The method of claim 8, wherein the first fibers are disposed in a first outermost fiber reinforcement layer next to the first weld region surface (20A) and all of the first fibers extend in a first fiber orientation, and the second fibers are disposed in a second outermost fiber reinforcement layer next to the second weld region surface (22A) and all of the second fibers extend in a second fiber orientation.

10. The method of claim 7 or the method of claim 9, wherein the first fiber orientation is disposed at a first angle relative to the travel axis (28), and the second fiber orientation is disposed at a second angle relative to the travel axis (28), and the second angle is different from the first angle.

11. The method of claim 7 or the method of claim 9, wherein the first fiber orientation is disposed at a first angle relative to the travel axis (28), and the second fiber orientation is disposed at a second angle relative to the travel axis (28), and the second angle is the same as the first angle and neither is zero degrees or ninety degrees.

12. The method of claim 7 or the method of claim 9, wherein the first fiber orientation is disposed at a first angle in a first range between zero degrees and ninety degrees relative to the travel axis (28), and the second fiber orientation is disposed at a second angle that is in a second range that is greater than zero degrees and less than ninety degrees relative to the travel axis (28).

13. The method of claim 12, wherein the first angle is about forty-five degrees relative to the travel axis (28) and the second angle is about forty-five degrees relative to the travel axis (28).

14. The method of claim 13, wherein the first fiber orientation is perpendicular to the second fiber orientation.

15. The method of claim 12, wherein the first fiber orientation is parallel to the second fiber orientation.
